# EUROPEAN PATENT SPECIFICATION

(11) **EP 2 602 469 B1**
(45) Date of publication and mention of the grant of the patent: **30.03.2016**
(21) Application number: 11290570.8
(22) Date of filing: 09.12.2011
(51) Int. Cl.: F02M 35/12, B29C 45/44

(54) **Acoustic resonator of a system for piping gas of an internal combustion engine and a process for manufacturing an acoustic resonator**
Akustischer Resonator eines Systems für die Leitung von Gas eines Verbrennungsmotors und Verfahren zur Herstellung des akustischen Resonators
Résonateur acoustique d'un système de conduite de gaz d'un moteur de combustion interne et procédé de fabrication d'un résonateur acoustique

(43) Date of publication of application: 12.06.2013
(73) Proprietor: MANN+HUMMEL GmbH, 71638 Ludwigsburg (DE)
(72) Inventor: Blanc-Brude, Guillaume, 53810 Changé (FR)

(56) References cited:
- EP-A1- 1 873 364
- EP-A1- 2 101 057
- EP-A2- 1 624 180
- DE-A1- 19 532 751
- DE-A1- 19 814 772
- FR-A1- 2 768 961

## Description

### Technical Field

The present invention relates to an acoustic resonator of a system for piping gas, in particular an intake system or an exhaust system, of an internal combustion engine in particular of a motor vehicle, having a housing with a volume for the gas, which has at least one opening for the gas and which has at least one extension that projects in radial direction to an axis, which passes through the at least one opening, beyond this at least one opening.

Further the present invention relates to a process for manufacturing an acoustic resonator of a system for piping gas, in particular an intake system or an exhaust system, of an internal combustion engine in particular of a motor vehicle, whereby a housing with a volume for the gas is formed with at least one opening for the gas and with at least one extension that projects in radial direction to an axis, which passes through the at least one opening, beyond this at least one opening.

### State of Technology

An acoustic resonator of an internal combustion engine known from the market has the function to reduce sound energy which is produced by a mechanical system in move-ment with engine speed creating air pulsation (valves, turbo, compressor). The acoustic resonator has a housing with an inlet and an outlet for the air. The housing has a main volume with more or less cylindrical shape. The outlet and the inlet are placed in opposite front sides of the main volume. An additional volume connected to the main volume extends on the circumferential side of the main volume in radial direction beyond the inlet and the outlet. The housing is made up of two parts. One of the parts contains the additional volume, a section of the main volume and a section of the inlet and the outlet each. The other part contains the rest of the main volume, the inlet and the outlet each. The two parts of the housing are welded together.

From DE 198 14 772 A1 a broadband noise silencer is known which consists of a sequence of geometric shapes incorporated within a single element. The element incorporates inlet and outlet connectors, with or without recesses, grooves, widened and narrowed sections, and a series of chambers of different volume.

The FR 2 768 961 A shows an air intake channel, molded with a silencer and/or resonator. A second plastics material can be co-extruded with an intermediate film to bond it together with a first plastic material in layers.

The DE 195 32 751 A1 shows a silencer which has a noise baffle within its body to vary the through flow cross section of the housing. A number of baffles are spaced apart from each other and fitted along the body's axis. The distances between the baffles are continuously adjustable.

It is an object of the invention to provide an acoustic resonator with an improved robustness and an improved acoustic efficiency, which can easy be produced.

### Disclosure of Invention

The object is achieved by that the housing is formed in one piece.

Favourably, the housing with the main volume and the extended volume is an integrated whole. There is no connection between different parts of the housing necessary as it is with the acoustic resonator known from state-of-the-art. This simplifies the manufacturing of the housing. The number of necessary process steps is decreased. Further the robustness, in particular the mechanical strength, of the housing is increased. Besides the acoustic resonator can tolerate higher temperatures and/or higher pressures. Even complex shapes of the outside and the inside of the housing can easy be realized. Additionally, connecting flanges can easy be integrated in the housing. Advantageously, the housing can have a main volume and at least one extended volume, which is connected to the main volume and which projects in radial direction beyond the at least one opening. The extended volume, the geometry of the volume and the configuration of the volume(s) increases the acoustic efficiency. Advantageously, the at least one opening can be an inlet or an outlet.

According to a favourable embodiment of the invention, a main cross-section of the housing can be circular or oval and the at least one extension can expand the main cross-section. The robustness of the housing can be increased with a circular or oval main cross-section.

Favourably, the at least one opening can be circular and the axis can be the central axis of the at least one opening. The circular opening allows that the housing can be connected easy and robust to a circular tube by spin welding.

According to the invention, the housing is formed by injection-molding. With injection-molding also complicate shapes can be realized. Advantageously, the housing can be made of plastic. Plastic can easy be formed by molding or injection molding. Plastic can easy be recycled. The housing can also be made of another material. In particular it can be die-casted or casted of metal.

According to the invention, the contour of the inner surface of the housing on the opposite side of the at least one extension exchanges unobstructed in particular without a step into the radial inner circumferential surface of the at least one opening. So the housing can be formed by use of a core with two or more core parts. One of the core parts can be used for forming the extension. One other of the core parts can be placed on the opposite side of the extension. After forming the housing, the core part on the opposite side of the extension easy can be removed through the opening. The core part forming the extension then can be moved to the former place of the removed core part and can then also be removed through the opening.

According to a further favorable embodiment of the invention, in the at least one extension at least one protuberance, in particular at least one dividing wall, can extend towards the interior of the housing. With the protuberances the acoustic efficiency of the acoustic resonator further can be increased. Further the mechanical stability of the housing can be used.

The object is also achieved by that the housing is formed in one piece by molding or casting using a core with at least two separable core parts, whereby at least one of the core parts forms the at least one extension; for demolding at least one other core part is removed through the at least one opening, the at least one core part which forms the at least one extension is initially moved away from the extension towards the interior of the housing and then is also removed through the at least one opening. The use of separable core parts allows that the extension can be formed in kind of an undercut behind the at least one opening. At least one of the core parts can removed directly through the at least one opening to release the core part which forms the extension. The above-mentioned advantages and an characteristic features of the inventive acoustic resonator apply analogously to the inventive process of manufacturing and its favorable embodiments. Advantageously the housing can be formed by injection-molding or die-casting.

### Brief Description of Drawings

The present invention together with the above-mentioned and other objects and advantages may best be understood from the following detailed description of the embodiments, but not restricted to the embodiments, wherein is shown schematically
- Figure 1: a first isometric view of an acoustic resonator of an intake system of an internal combustion engine;
- Figure 2: a longitudinal section of the acoustic resonator of figure 1;
- Figure 3: a second isometric view of the acoustic resonator of figures 1 and 2;
- Figure 4: a longitudinal section of the acoustic resonator of figures 1 to 3 with a two-part core in an early step of an injection-molding process;
- Figure 5: the acoustic resonator of figure 4 in a later step of the injection-molding process, where one part of the core is removed.

In the drawings, equal or similar elements are referred to by equal reference numerals. The drawings are merely schematic representations, not intended to portray specific parameters of the invention. Moreover, the drawings are intended to depict only typical embodiments of the invention and therefore should not be considered as limiting the scope of the invention.

### Embodiment(s) of Invention

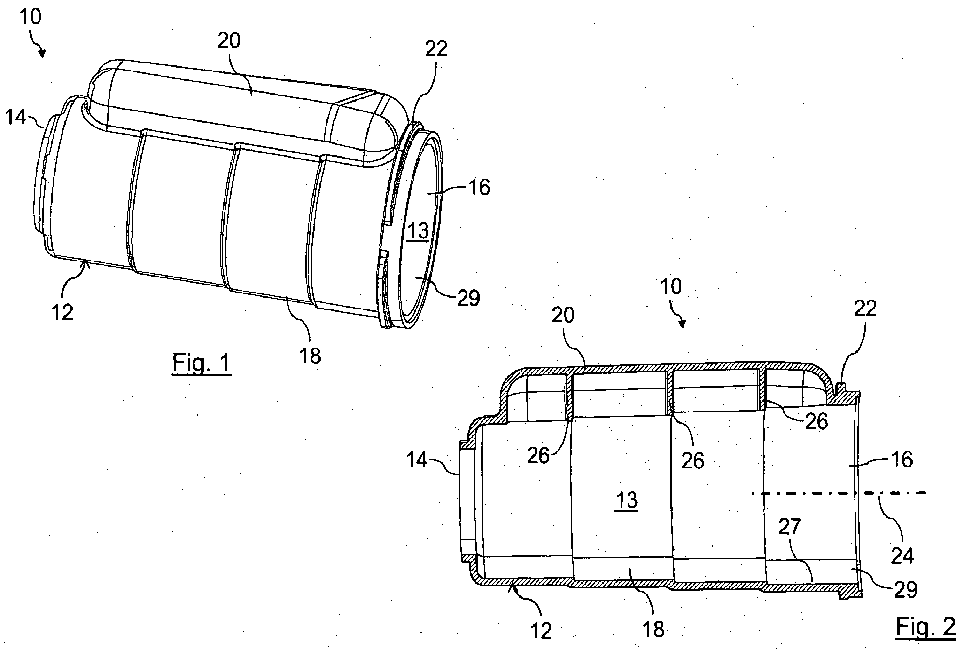

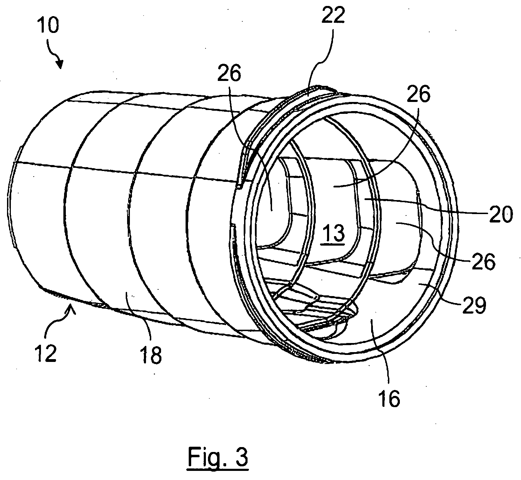

In the figures 1 to 3 an acoustic resonator 10 of an air intake system of an internal combustion engine of a motor vehicle is shown.

The resonator 10 comprises a housing 12 made of plastic with a volume 13, a circular inlet opening 14 and a circular outlet opening 16 for the air. The inlet opening 14 is connected to a not shown first part of a line of the air intake system. The outlet opening 16 is connected to a not shown second part of the line of the intake system. The inlet opening 14 is placed in the small base of a conical section 18 of the housing 12. The outlet opening 16 is placed in the large base of the conical section 18. The conical section 18 is circular shaped. In actual direction it is multiple graded.

On one circumferential side an extension section 20 is arranged in one piece at the conical section 18. The extension section 20 stretches in axial direction from a discontinuous circumferential collar 22, which is arranged nearby the outlet opening 16 on the radial outer side of the conical section 18, nearly to the inlet opening 14. In radial direction to a central axis 24 of the outlet opening 16, which is coaxial to the conical section 18, the extension section 20 projects beyond the outlet opening 16 and the inlet opening 14. Three dividing walls 24 are arranged in one piece with the extension section 20 on the inner side of the extension section 20. The dividing walls 26 extend it in circumferential direction and radial to the axis 24 towards the interior of the housing 12. The contours of the free edges of the dividing walls 26 exchange to the contour of the radial inner surface of the conical section 18.

The contour of the inner surface 27 of the conical section 18 of the housing 12 on the opposite side of the extension section 20 exchanges unobstructed without any step into the radial inner circumferential surface 29 of the outlet opening 16.

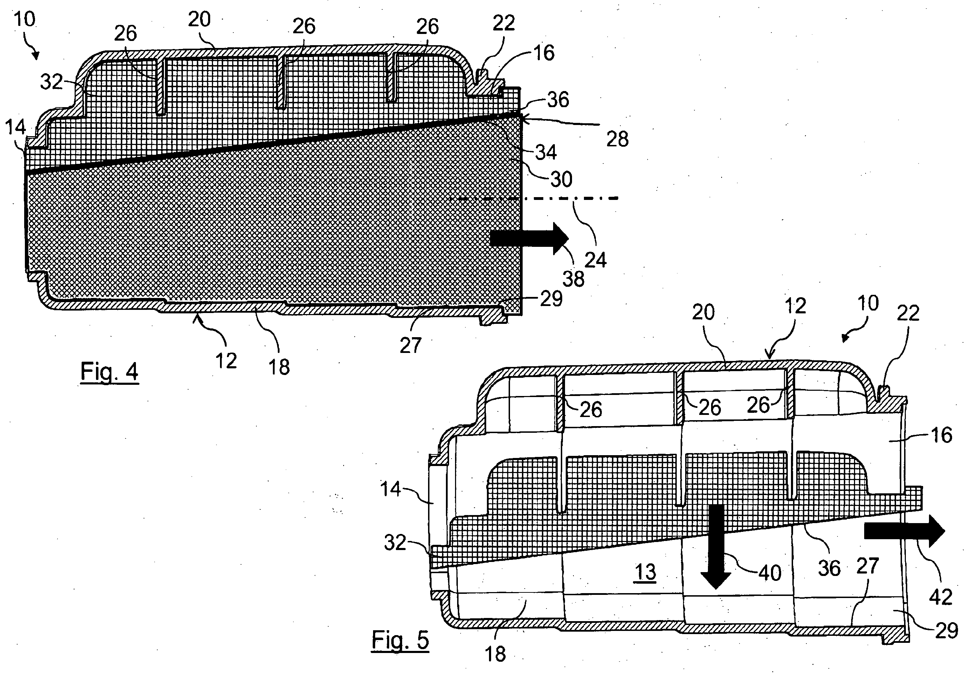

The housing 12 is formed by injection-molding as shown in the figure 4. Therefore a two-part core 28 is used. The core 28 is placed in a not shown mold. The core 28 comprises a main core part 30 and an extended core part 32 which can be separated. The main core part 30 and the extended core part 32 extend axial to the central axis 24 through the inlet opening 14 and through the outlet opening 16 each. A plane surface 34 of the main core part 30 lies flat on a plane surface 36 of the extended core part 32. The surfaces 34 and 36 are placed between the axis 24 and the extension section 20. The surfaces 34 and 36 extend diagonal to the axis 24. The main core part 30 has the form of a wedge, which tapers to the inlet opening 14.

Liquid plastic is injected in a space between the mold and the core 28. The radial outer circumferential side of the extended core part 32 forms the inner surface of the extension section 20, the dividing walls 26 and a part of the conical section 18, the inlet opening 14 and the outlet opening 16 each. The radial outer circumferential side of the main core part 30 forms the rest of the inner surface of the conical section 18, the inlet opening 14 and the outlet opening 16 each.

For demolding the housing 12 first the main core part 13 is removed axial to the central axis 24 through the outlet opening 16, in figure 4 indicated with an arrow 38. Then the extended core part 32 is moved radial to the axis 24 towards the interior of the housing, in figure 5 indicated with an arrow 40. As soon as the extended core part 32 has left the extension section 20, it is also removed through the outlet opening 16, in figure 5 indicated with an arrow 42.

The invention is not limited to an acoustic resonator 10 of an intake system of an internal combustion engine of a motor vehicle. The invention can also be applied for other kinds of acoustic resonators of systems for piping gas, for example an exhaust system of an internal combustion engine. The invention can further be applied to other kinds of internal combustion engines, for example industrial engines.

The housing 12 can also have more or less than two openings 14,16.

Instead of being circular the inlet opening 14 and/on the outlet opening 16 can have another cross-section, for example and oval cross-section.

The function of the openings 14 and 16 can be changed.

The conical section 18 can also have a cross-section different form circular. For example it can have an oval or an angular cross-section.

The section 18 can also have a cylindrical shape. The shape of the section 18 can also vary in direction of the axis 24.

The housing 12 can have more than one extension section 20. The extension section 20 can also have another shape.

Besides more or less than three dividing walls 26 can be realized. The housing 12 also can be realized without dividing walls 26.

Instead of the dividing walls 26 other kinds of protuberances can be realized. Also depressions can be realized in the wall of the extension section 20.

The housing 12 can also be formed by a method different from injection-molding. For example it can be formed by simple molding.

The housing 12 can also be made of a material different from plastic. For example it can be die-casted or casted of metal.

The core 28 also can comprise more than two core parts 30, 32.

Instead of plane surfaces 34 and 36 for example curved surfaces can be realized.

Instead of extending diagonal the surfaces 34 and 36 can extend parallel to the axis 24.

Instead of exchanging unobstructed into the radial inner circumferential surface of the outlet opening 16, the contour of the inner surface of the extension section 20 can project radial to the axis 24 beyond the outlet opening 16. Advantageously the core 28 can comprise three core parts, whereby a central core part can be removed firstly through the outlet opening 16 and then one after another the other two core parts can be removed.

## Claims

1. Acoustic resonator (10) of a system for piping gas, in particular an intake system or an exhaust system, of an internal combustion engine in particular of a motor vehicle, having a housing (12) with a volume (13) for the gas, which has at least one opening (14, 16) for the gas and which has at least one extension (20) that projects in radial direction to an axis (24), which passes through the at least one opening (16), beyond this at least one opening (16), **characterized in that,** the housing (12) is formed in one piece, wherein the housing (12) is formed by injection-molding, wherein the contour of an inner surface (27) of the housing (12) on the opposite side of the at least one extension (20) exchanges unobstructed in particular without a step into the radial inner circumferential surface (29) of the at least one opening (16).

2. Resonator according to claim 1, **characterized in that,** a main cross-section (18) of the housing (12) is circular or oval and the at least one extension (20) expands the main cross-section (18).

3. Resonator according to claim 1 or 2, **characterized in that,** the at least one opening (16) is circular and the axis is the central axis (24) of the at least one opening (16).

4. Resonator according to one of the previous claims, **characterized in that,** in the at least one extension (20) at least one protuberance, in particular at least one dividing wall (26), extends towards the interior of the housing (12).

5. Process for manufacturing an acoustic resonator (10) of a system for piping gas, in particular an intake system or an exhaust system, of an internal combustion engine in particular of a motor vehicle, whereby a housing (12) with a volume (13) for the gas is formed with at least one opening (14, 16) for the gas and with at least one extension (20) that projects in radial direction to an axis (24), which passes through the at least one opening (16), beyond this at least one opening (16), **characterized in that,** the housing (12) is formed in one piece by molding or costing using a core (28) with at least two separable core parts (30, 32), whereby at least one of the core parts (32) forms the at least one extension (20); for demolding at least one other core part (30) is removed through the at least one opening (16), the at least one core part (32) which forms the at least one extension (20) is initially moved away from the extension (20) towards the interior of the housing (12) and then is also removed through the at least one opening (18).

## Patentansprüche

1. Akustischer Resonator (10) eines Systems zum Leiten von Gas, insbesondere ein Ansaugsystem oder ein Abgassystem, einer Brennkraftmaschine insbesondere eines Kraftfahrzeugs, mit einem Gehäuse (12) mit einem Volumen (13) für das Gas, welches mindestens eine Öffnung (14, 16) für das Gas hat und welches mindestens eine Erstreckung (20) hat, die sich in radialer Richtung einer Achse (24), welche durch die mindestens eine Öffnung (16) führt, über diese mindestens eine Öffnung (16) hinaus erstreckt, **dadurch gekennzeichnet, dass** das Gehäuse (12) einteilig gebildet ist, wobei das Gehäuse (12) mittels Spritzgussverfahren gebildet ist, wobei die Kontur einer Innenfläche (27) des Gehäuses (12) auf der gegenüberliegenden Seite der mindestens einen Erstreckung (20) ungehindert insbesondere ohne eine Stufe in die radial innere Umfangsfläche (29) der mindestens einen Öffnung (16) übergeht.

2. Resonator nach Anspruch 1, **dadurch gekennzeichnet, dass** ein Hauptquerschnitt (18) des Gehäuses (12) kreisförmig oder oval ist und dass die mindestens eine Erstreckung (20) den Hauptquerschnitt (10) ausdehnt.

3. Resonator nach Anspruch 1 oder 2, **dadurch gekennzeichnet, dass** mindestens eine Öffnung (16) kreisförmig ist und dass die Achse die Mittelachse (24) von der mindestens einen Öffnung (16) ist.

4. Resonator nach einem der vorherigen Ansprüche, **dadurch gekennzeichnet, dass** in der mindestens einen Erstreckung (20) mindestens eine Ausstülpung, insbesondere mindestens eine Trennwand (26), sich in Richtung Innenbereich des Gehäuses (12) erstreckt.

5. Fertigungsprozess für einen akustischen Resonator (10) eines Systems zum Leiten von Gas, insbesondere ein Ansaugsystem oder ein Abgassystem, einer Brennkraftmaschine insbesondere eines Kraftfahrzeugs, bei dem ein Gehäuse (12) mit einem Volumen (13) für das Gas mit mindestens einer Öffnung (14, 16) für das Gas und mit mindestens einer Erstreckung (20) gebildet wird, die sich in radialer Richtung einer Achse (24), welche durch die mindestens eine Öffnung (16) führt, über diese mindestens eine Öffnung (16) hinaus erstreckt, **dadurch gekennzeichnet, dass** das Gehäuse (12) einteilig durch Formen oder Gießen durch die Verwendung eines Kerns (28) mit mindestens zwei trennbaren Kernteilen (30, 32) gebildet ist, wodurch mindestens eines der Kernteile (32) die mindestens eine Erstreckung (20) bildet; zum Entformen wird mindestens ein anderes Kernteil (30) durch die mindestens eine Öffnung (16) entnommen, das mindestens eine Kernteil (32), welches die mindestens eine Erstreckung (20) bildet, wird zunächst von der Erstreckung (20) in Richtung Innenbereich des Gehäuses (12) gebracht und wird dann ebenfalls durch die mindestens eine Öffnung (16) entnommen.

## Revendications

1. Résonateur acoustique (10) dans un système de conduite de gaz, en particulier un système d'admission ou un système d'échappement, d'un moteur à combustion interne en particulier dans un véhicule à moteur, avec un boîtier (12) avec un volume (13) pour le gaz, qui a au moins une ouverture (14, 16) pour le gaz et qui a au moins une extension (20) qui dépasse dans le sens radial vers un axe (24), qui passe à travers l'au moins une ouverture (16), au-delà de cette au moins une ouverture (16), **caractérisé en ce que** le boîtier (12) est formé d'une pièce, le boîtier (12) étant formé par moulage par injection, le contour d'une surface intérieure (27) du boîtier (12) sur le côté opposé à l'au moins une extension (20) se raccordant sans obstacle, et en particulier sans gradin, à la surface circonférentielle intérieure dans le sens radial (29) de l'au moins une ouverture (16).

2. Résonateur selon la revendication 1, **caractérisé en ce qu**'une section principale (18) du boîtier (12) est circulaire ou ovale et que l'au moins une extension (20) augmente la section principale (18).

3. Résonateur selon la revendication 1 ou 2, **caractérisé en ce que** l'au moins une ouverture (16) est circulaire et que l'axe est l'axe central (24) de l'au moins une ouverture (16).

4. Résonateur selon l'une des revendications précédentes, **caractérisé en ce que** dans l'au moins une extension (20), au moins une saillie, en particulier au moins une cloison (26), s'étend vers l'intérieur du boîtier (12).

5. Procédé de fabrication d'un résonateur acoustique (10) dans un système de conduite de gaz, en particulier un système d'admission ou un système d'échappement, d'un moteur à combustion interne en particulier dans un véhicule à moteur, dans lequel un boîtier (12) avec un volume (13) pour le gaz est formé avec au moins une ouverture (14, 16) pour le gaz et avec au moins une extension (20) qui dépasse dans le sens radial vers un axe (24), qui passe à travers l'au moins une ouverture (16), au-delà de cette au moins une ouverture (16), **caractérisé en ce que** le boîtier (12) est formé d'une pièce par moulage ou coulée en utilisant un noyau (28) comprenant au moins deux parties de noyau séparables (30, 32), de sorte que l'une au moins des parties de noyau (32) forme l'au moins une extension (20) ; pour le démoulage au moins une autre partie de noyau (30) est retirée à travers l'au moins une ouverture (16), l'au moins une partie de noyau (32) formant l'au moins une extension (20) est d'abord écartée de l'extension (20) vers l'intérieur du boîtier (12) puis également retirée à travers l'au moins une ouverture (16).
